# EUROPEAN PATENT SPECIFICATION

(11) **EP 2 916 096 B1**
(45) Date of publication and mention of the grant of the patent: **23.10.2019**
(21) Application number: 15157531.3
(22) Date of filing: 04.03.2015
(51) Int. Cl.: F41G 1/38, G02F 1/15

(54) **An optical assembly comprising an electrochromic filter for adjusting the amount of scene light passed onto the eyepiece**
Optische Anordnung umfassend ein elektrochromes Filter zur Änderung der zum Okular weitergeleiteten Menge von Szenenlicht
Ensemble optique comprenant un filtre électrochrome permettant de changer la quantité de la lumière de décor passant à l'oculaire

(30) Priority: 05.03.2014 GB 201403865
(43) Date of publication of application: 09.09.2015
(73) Proprietor: Qioptiq Limited, Denbighshire LL17 0LL (GB)
(72) Inventor: Rickard, Steven, Ruthin, Denbighshire LL15 1DU (GB); Williams, Gary, St. Asaph, Denbighshire LL17 0SX (GB)
(74) Representative: Guardian IP Consulting I/S

(56) References cited:
- EP-A1- 2 584 401
- WO-A2-2010/134738
- GB-A- 2 119 125
- US-A1- 2011 213 664
- US-A1- 2013 008 072
- US-B1- 7 042 628

## Description

The present invention relates to an optical assembly.

The invention is intended to provide particular benefits when embodied in an optical assembly such as an augmented reality surveillance sight, weapon sight, head/helmet mounted display or goggle, although it is to be appreciated that in its broadest sense the invention is not limited solely to such applications.

Handheld surveillance and weapon mounted sights are well known, and typically comprise a number of lens elements arranged to focus light from a scene viewed by the user via the eyepiece of the sight. Such sights often include image intensifier arrangements to increase the intensity of available light in the optical system to permit use of the sight in low-light conditions such as at night, or for conversion of non-visible light sources such as infrared.

Sights of the general type described above are often configured to provide a user viewing the scene with an augmented reality image at the eyepiece of the sight, in which computer-generated imagery is combined with the optical image of the scene. Such imagery can include, for example, range and targeting information such as wind speed, and other real-time data pertaining to the user's mission or objective. Such sights include a micro-display, or a small projector, which is associated with a beam-combiner arranged to display the computer generated display co-axially with the optical image of the scene when viewed through the eyepiece lens of the sight. As will be appreciated, augmented reality sights of this type require a local power supply in order to provide electrical power to the display and its associated processor. The power supply typically comprises a small number of standard AA size batteries.

However, previously proposed augmented reality sights of the type described above suffer from significant disadvantages when used in the field, which can adversely affect their usefulness in real world conditions. Such a problem arises when the sight is used in varying levels of ambient light; for example at night time, or in low light conditions and also in daylight. For night time/low light operation, only a relatively low level of illumination reflected from the scene is captured by the objective lens of the sight which means that without any other adjustment there is typically a significant difference between the intensity of light originating from the scene and the intensity of light originating from the display . When viewed through the eyepiece the user is presented with an augmented image in which the computer-generated image is (ideally) clearly visible, or sometimes (disadvantageously) may be so bright such that aspects of the optical image of the scene become obscured. Conversely, during daylight operation of the sight, a much higher intensity of light enters the sight via the objective lens, which can mean that the scene light level is significantly greater than the light produced by the display, resulting in the user being presented with an image at the eyepiece in which he or she can see little of the computer-generated image, or sometimes none at all.

One previous proposal to address the above-mentioned problem has been to balance the brightness of the display with typically encountered minimum ambient light intensity, and then increase the brightness of the display in bright conditions. However, this increases the power consumption of the display and its associated circuitry in bright conditions and is not always a comfortable level of illumination for the user.

Other proposals to address the aforementioned problem include providing some form of light attenuating filter over the objective lens of the sight. Adjustable irises have been proposed for this purpose, as have polarising filters, but both are considered crude and inconvenient to use in the field, as well as potentially degrading the performance of the optical assembly, such as significant light losses in the most transmissive state.

US 2013/0008072 A1 relates to a dot sight device which is able to automatically control a brightness of a targeting dot.

GB 2119125 relates to an optical sight that enables light from a distant field of view to be combined with a locally generated display. The brightness of the locally generated display is adjusted so as to keep it compatible with the brightness of the viewed scene.

WO 2010/134738 A2 relates to a composite optical device for sighting targets and measuring distances. The device includes first and second "attenuators" (in fact polarizers) which in combination allow to manually control the intensity of day-time images viewed through the device. The second polarizer is installed at the eye-piece so that a user can operate the control from outside.

US 7,042,628 B1 relates to a variable electrochromic optical attenuator that is used to control the intensity of a light signal. The electrochromic optical attenuator comprises a semitransparent electrochromic device, which can be controlled by means of an electrical signal. The electrochromic optical attenuator also includes at least one polarizing element.US 2011/0213664 A1 concerns a head-mounted eyepiece including an optical assembly through which the user views a surrounding environment and displayed content. An electrochromic layer included in the optical assembly may be employed to adjust the display depending on displayed content requirements and surrounding environmental conditions.

It is therefore an object of the present invention to provide an improved optical assembly. According to the present invention, there is provided an optical assembly for viewing a scene, the optical assembly having an optical path extending from an objective end of the optical assembly to an eyepiece and being characterised by the provision of an electrochromic filter mounted within said optical path and an electrical control arrangement, the control arrangement being electrically connected to the electrochromic filter and operable to adjust the optical transmittance of the electrochromic filter to thereby control the intensity of scene light which reaches the eyepiece along the optical path.

The control arrangement includes a light sensor and is configured to adjust the optical transmittance of the electrochromic filter automatically in dependence on the intensity of light incident on the light sensor.

The optical assembly further comprises an electronic display configured to produce electronic imagery, and a beam-combiner, the beam-combiner being arranged in said optical path and being configured to combine light emitted by said display with scene light from said objective end of the optical assembly to produce an augmented reality image at said eyepiece.

Conveniently, the control arrangement is configured for manual operation by a user to adjust the optical transmittance of the electrochromic filter manually. The control arrangement may include a user control to facilitate said manual operation.

Conveniently, the control arrangement is configured to reduce the optical transmittance of the electrochromic filter in response to an increase in light intensity incident on the light sensor.

The light sensor may be positioned for exposure to ambient light around the optical assembly such that said control arrangement is configured to adjust the optical transmittance of the electrochromic filter automatically in dependence on the intensity of said ambient light incident on the sensor.

Conveniently, the light sensor is positioned for exposure to scene light from a scene viewed by the optical assembly such that said control arrangement is configured to adjust the optical transmittance of the electrochromic filter automatically in dependence on the intensity of said scene light incident on the sensor.

Said beam-combiner may comprise a prism.

Conveniently, said beam-combiner is mounted in said optical path at a position between the electrochromic filter and the eyepiece

Optionally, the optical assembly further comprises an image intensifier and wherein the electrochromic filter is mounted within said optical path, between the image intensifier and the beam-combiner.

Conveniently, the optical assembly has an objective lens at the front of the sight, and wherein the electrochromic filter is mounted within said optical path behind the objective lens. Alternatively, the electrochromic filter may be mounted in front of the objective lens. Advantageously, said control arrangement is configured to adjust the optical transmittance of the electrochromic filter automatically to provide a predetermined intensity of scene light at said eyepiece.

Optionally, said electrochromic filter is configured to attenuate only predetermined selected wavelengths of light within the visible spectrum. In such an arrangement, the electrochromic filter may be configured to attenuate only wavelengths of light corresponding to the wavelengths emitted by the display.

The optical assembly may include a power supply configured to supply electrical power to the control arrangement. The power supply may also provide electrical power to the display. So that the invention may be more readily understood, and so that further features thereof may be appreciated, embodiments of the invention will now be described by way of example with reference to the accompanying drawings in which:
Figure 1 is a schematic longitudinal cross-sectional view of an optical sight in accordance with the present invention; and
Figure 2 is a schematic block diagram showing aspects of the optical sight of figure 1.

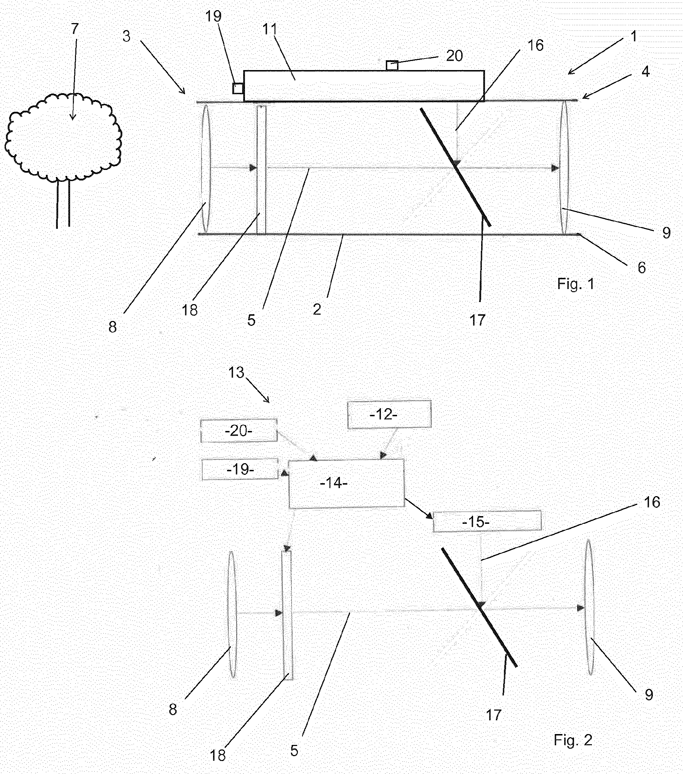

Turning now to consider the drawings in more detail, figure 1 shows a handheld surveillance sight 1 in longitudinal cross-section. The sight 1 is shown as having a generally cylindrical housing 2, within which and on which various components of the sight 1 are mounted. However, in other embodiments the housing may not be cylindrical. It is also to be appreciated that the sight 1 could alternatively be configured as a weapon-mounted sight, in which case the housing 2 will be provided with an appropriate mounting arrangement to permit removable connection of the housing to a weapon such as a rifle.

The housing 2 is elongate and has an objective end 3 and an eyepiece end 4. The longitudinal axis 5 of the housing defines the principle optical axis of the sight, the optical axis extending from the objective end 3 to the eyepiece end 4. The eyepiece end 4 defines an eyepiece 6 of the sight which a user may position an eye, taking into account eye relief, to view a scene 7 (illustrated schematically and not to scale). As is conventional, the eyepiece 6 of the sight may be provided with a rubber cup or the like (not shown) to provide improved comfort to the user, and to help block extraneous light.

An objective lens 8 is mounted within the optical path 5 of the sight at the objective end 3, and an eyepiece lens 9 is similarly mounted at the eyepiece end 4. Other optical elements or components may also be mounted in the optical path 5, such as an image intensifier tube (not shown). As will be appreciated, the entire optical system of the sight 1 is configured to capture scene light from the scene 7 and focus it near the eyepiece 6 to produce an optical image of the scene for viewing by the user through the eyepiece 6.

The sight 1 further includes a power supply and electronic circuitry. In the arrangement illustrated in figure 1, the power supply and circuitry is provided within a secondary housing 11 which may be mounted to, or formed integrally with the main optical housing 2. The main components provided within the secondary housing 11 are shown schematically in the block diagram of figure 2.

As therefore shown in figure 2, the sight 1 further includes an electric power supply 12 which may, for example, comprise one or more small batteries. The power supply 12 is electrically connected to a control arrangement 13 which includes a controller 14 which may comprise a printed circuit board and a memory. An output of the controller 14 is connected to an electronic light-emitting display 15, such as an LED-type flat panel display or a small projector. The display 15 is configured to emit display light 16 in a computer generated image controlled by the controller 14 or transmitted thereto from a remote transmitter, and is mounted to direct the display light 16 to a beam combiner 17 which is mounted within the main housing 2, in the optical path 5 of the sight between the objective lens 8 and the eyepiece lens 9.

The beam combiner 17 may be of any convenient configuration known for use in augmented reality sights and may, for example, comprise a prism. As will be appreciated, the beam combiner 17 is thus arranged to receive both scene light from the objective lens 8, and display light 16 emitted from the display 15. The beam combiner 17 thus optically fuses the scene image produced by the objective lens 8 and the display image in a coaxial manner, to provide an augmented reality image at the eyepiece 6, thereby presenting the user with an optical image of the scene 7 overlaid with the display image. It is envisaged that the display image may include relevant data of use to the user such as computationally derived range to the scene 7 or the like.

The sight 1 also includes an electrochromic filter 18 which is mounted within the main housing 2, behind the objective lens 8 and in the optical path 5. The electrochromic filter 18 is mounted between the objective lens 8 and the beam combiner 17. The electrochromic filter is connected to an output of the controller 14 for control in a manner described in more detail below.

In addition to the controller 14 and the display 15, the control arrangement 13 also includes a light sensor 19 and may also include a user control 20, each of which is connected to a respective input of the controller.

The light sensor 19 may be mounted to the sight 1 in any convenient position, but in the arrangement shown in figure 1, it is mounted to a forward-facing region of the secondary housing 11, so as to be directed generally towards the scene 7 being viewed through the sight. Mounted in this position, the light sensor 19 is positioned for exposure to scene light from the scene 7 when the sight 1 is held so as to view the scene. However, it is also envisaged that the light sensor 19 could instead be positioned for exposure to ambient light around the sight 1, and so in such an arrangement the sensor could be positioned, for example, on the top of the secondary housing 11 so that it is not oriented directly towards the scene 7.

The user control 20 can take any convenient form but may, for example, be provided as a switch or a knob arranged to move an encoder or vary the position of a potentiometer. The user control 20 is shown in figure 1 mounted to the top of the secondary housing 11 for convenient operation by a person using the sight. In other embodiments, however, it is envisaged that the user control 20 could be mounted to the main housing, or could be provided on a remote control unit.

The optical transmittance of the electrochromic filter can be adjusted by the control arrangement 13, either in response to movement or operation of the user control 20, or in response to signals produced by the light sensor 19 representative of the intensity of light incident on the sensor, in order to adjust the intensity of scene light which passes through the filter 18 and on to the beam combiner 17. The controller 14 controls the electrochromic filter 18 in this way by adjusting the electrical current passed to the electrochromic filter. As will be appreciated, by adjusting the electrochromic filter 18 in a manner effective to reduce its optical transmittance, the intensity of light passed by the filter is reduced and conversely, by adjusting the electrochromic filter 18 in a manner effective to increase its optical transmittance, the intensity of light passed by the filter is increased. In this manner, the arrangement of the present invention permits the brightness of the optical scene image to be balanced with the brightness of the display image to ensure that a person viewing the combined augmented reality image at the eyepiece is able to see both components of the image clearly.

The user control 20 permits a person using the sight to operate the control arrangement 13 manually and to thereby manually adjust the transmittance of the electrochromic filter 18, and hence the brightness of the scene image, in order to balance it with the brightness of the display image. It is envisaged that the manual user control 20 will likely be configured to offer the user "fine-tune" adjustment of the electrochromic filter following automatic "course adjustment" by the light sensor 19. Automatic adjustment of the electrochromic filter 18 is discussed in more detail below.

It is envisaged that the controller 14 will comprise a microprocessor and a memory. The memory will be programmed to store data pertaining to the transmittance of the electrochromic filter 18 and a perceived optimum predetermined intensity of scene light required at the eyepiece 6 in order to combine in a visually acceptable manner with the display image produced by the display 15. The controller is thus configured to adjust the transmittance of the electrochromic filter automatically in dependence on signals received from the light sensor 19 (and hence indicative of the intensity of light incident on the sensor), in order to set the electrochromic filter to the transmittance level required to achieve the predetermined scene light intensity at the eyepiece 6.

As will thus be appreciated, the controller 14 is configured to reduce the transmittance of the electrochromic filter automatically in response to a signal from the light sensor 19 representative of an increase in light intensity at the sensor, to thereby reduce the brightness of the scene light component of the combined image provided at the eyepiece in relatively bright conditions such as daylight. Furthermore, the controller 14 is configured to increase the transmittance of the electrochromic filter automatically in response to a signal from the light sensor 19 representative of a reduction in light intensity at the sensor, to thereby increase the intensity of the scene light component of the combined image provided at the eyepiece in relatively dark conditions such as at night time. By carefully calibrating the system, and in particular the electrochromic filter 18 and the controller 14, the sight 1 is therefore operable to automatically control the intensity of scene light reaching the eyepiece and to balance this with the intensity of display light produced by the display in order to avoid either the scene image or the display image components of the compound image at the eyesight becoming invisible or not clearly visible by the user.

As will be appreciated, in the case of the light sensor 19 being mounted for exposure to scene light directly from the scene 7, the control arrangement 13 will thus be configured to adjust the optical transmittance of the electrochromic filter 18 automatically in dependence on the intensity of said scene light incident on the sensor. In the case of the light sensor 19 being mounted for exposure to ambient light in the vicinity of the sight, the control arrangement 13 is configured to adjust the optical transmittance of the electrochromic filter 18 automatically in dependence on the intensity of said ambient light incident on the sensor 19.

As indicated above, it is envisaged that some embodiments of the sight 1 may be provided with image intensifier arrangements. In such an arrangement, it is proposed that the electrochromic filter 18 will be arranged in the optical path 5 of the sight, at a position located between the image intensifier and the beam-combiner 17. In this configuration, the electrochromic filter 18 will attenuate light exiting the image intensifier.

In other embodiments, it is envisaged that the electrochromic filter 18 may be mounted in front of the objective lens 8, rather than behind it as illustrated in the drawings.

It is furthermore possible to provide the electrochromic filter 18 in a configuration in which it attenuates only specific wavelengths of light within the visible spectrum. For example, such an arrangement would permit the electrochromic filter to be configured only to attenuate those wavelengths of light which are emitted by the display 15, thereby ensuring that the display component of the combined image at the eyepiece remains visible across a wide range of intensity in the scene light from the scene 7.

When used in this specification and claims, the terms "comprises" and "comprising" and variations thereof mean that the specified features, steps or integers are included. The terms are not to be interpreted to exclude the presence of other features, steps or integers.

## Claims

1. An optical assembly for viewing a scene, the assembly having an optical path (5) extending from an objective end (3) to an eyepiece (4), an electronic display (15) configured to produce electronic imagery, and a beam-combiner, the beam-combiner (17) being arranged in said optical path (5) and being configured to combine light emitted by said electronic display (15) with scene light from said objective end (3) of the optical assembly to produce an augmented reality image at said eyepiece (4),
**characterised by** the provision of an electrochromic filter (18) mounted within said optical path (5) and an electrical control arrangement (13), the control arrangement (13) being electrically connected to the electrochromic filter (18) and operable to adjust the optical transmittance of the electrochromic filter (18) to thereby control the intensity of scene light viewed through the eyepiece (4), wherein the control arrangement (13) includes a light sensor (19) and is configured to adjust the optical transmittance of the electrochromic filter (18) automatically in dependence on the intensity of light incident on the light sensor (19).

2. An optical assembly according to claim 1, wherein the control arrangement (13) is configured for manual operation by a user to adjust the optical transmittance of the electrochromic filter (18) manually with a user control.

3. An optical assembly according to any preceding claim, wherein the beam combiner (17) comprises a prism.

4. An optical assembly according to claim 3, wherein said control arrangement (13) is configured to reduce the optical transmittance of the electrochromic filter (18) in response to an increase in light intensity incident on the light sensor (19).

5. An optical assembly according to claim 3 or claim 4, wherein said light sensor (19) is positioned for exposure to ambient light around the optical assembly such that said control arrangement (13) is configured to adjust the optical transmittance of the electrochromic filter (18) automatically in dependence on the intensity of said ambient light incident on the sensor (19).

6. An optical assembly according to claim 3 or claim 4, wherein said light sensor (19) is positioned for exposure to the scene light from a scene viewed by the assembly such that said control arrangement (13) is configured to adjust the optical transmittance of the electrochromic filter (18) automatically in dependence on the intensity of said scene light incident on the sensor.

7. An optical assembly according to any preceding claim, wherein the beam-combiner (17) is arranged to receive both the scene light from the objective end (3) and light emitted by the electronic display (15) to optically fuse a scene image produced by an objective lens (8) and a display image in a coaxial manner.

8. An optical assembly according to claim 1, wherein said beam-combiner is mounted in said optical path (5) at a position between the electrochromic filter (18) and the eyepiece (4).

9. An optical assembly according to any one of claims 1 or 8, further comprising an image intensifier and wherein the electrochromic filter (18) is mounted within said optical path (5), between the image intensifier and the beam-combiner.

10. An optical assembly according to any preceding claim, wherein the assembly has an objective lens (8) at said objective end (3) of the optical assembly, and wherein the electrochromic filter (18) is mounted within said optical path (5) behind the objective lens (8).

11. An optical assembly according to any one of claims 1 to 8, wherein the optical assembly has an objective lens (8) at said objective end (3) of the sight, and wherein the electrochromic filter (18) is mounted at said objective end (3) of the sight in front of the objective lens (8).

12. An optical assembly according to any one of claims 1-8, wherein said control arrangement (13) is configured to adjust the optical transmittance of the electrochromic filter (18) automatically to provide a predetermined intensity of the scene light at said eyepiece (4).

13. An optical assembly according to any preceding claim, wherein said electrochromic filter (18) is configured to attenuate only predetermined selected wavelengths of light within the visible spectrum.

14. An optical assembly according to claim 13, as dependent upon any one of claims 8 to 10, wherein said electrochromic filter (18) is configured to attenuate only wavelengths of light corresponding to the wavelengths emitted by the electronic display (15).

15. An optical assembly according to any preceding claim, further including a power supply (12) configured to supply electrical power to the control arrangement (13), wherein the power supply (12) also provides electrical power to the electronic display (15).

## Patentansprüche

1. Optische Anordnung zum Betrachten einer Szene, wobei die Anordnung einen optischen Pfad (5), der sich von einem Objektivende (3) zu einem Okular (4) erstreckt, eine elektronische Anzeige (15), die zum Erzeugen elektronischer Bilder konfiguriert ist, und einen Strahlkombinierer, aufweist, wobei der Strahlkombinierer (17) in dem optischen Pfad (5) angeordnet und konfiguriert ist, um das von der elektronischen Anzeige (15) emittierte Licht mit Szenenlicht von dem Objektivende (3) der optischen Anordnung zu kombinieren, um ein Augmented-Reality-Bild an dem Okular (4) zu erzeugen,
**gekennzeichnet durch** die Bereitstellung eines elektrochromen Filters (18), der innerhalb des optischen Pfades (5) montiert ist, und einer elektrischen Steueranordnung (13), wobei die Steueranordnung (13) elektrisch mit dem elektrochromen Filter (18) verbunden und betreibbar ist, um die optische Durchlässigkeit des elektrochromen Filters (18) einzustellen, um dadurch die Intensität von durch das Okular (4) betrachtetem Szenenlicht zu steuern, wobei die Steueranordnung (13) einen Lichtsensor (19) beinhaltet und konfiguriert ist, um die optische Durchlässigkeit des elektrochromen Filters (18) automatisch in Abhängigkeit von der Intensität von auf den Lichtsensor (19) einfallendem Licht einzustellen.

2. Optische Anordnung nach Anspruch 1, wobei die Steueranordnung (13) für den Handbetrieb durch einen Benutzer konfiguriert ist, um die optische Durchlässigkeit des elektrochromen Filters (18) manuell mit einer Benutzersteuerung einzustellen.

3. Optische Anordnung nach einem der vorstehenden Ansprüche, wobei der Strahlkombinierer (17) ein Prisma umfasst.

4. Optische Anordnung nach Anspruch 3, wobei die Steueranordnung (13) konfiguriert ist, um die optische Durchlässigkeit des elektrochromen Filters (18) als Reaktion auf eine Erhöhung der auf den Lichtsensor (19) einfallenden Lichtintensität zu reduzieren.

5. Optische Anordnung nach Anspruch 3 oder Anspruch 4, wobei der Lichtsensor (19) so positioniert ist, dass er Umgebungslicht um die optische Anordnung herum ausgesetzt ist, so dass die Steueranordnung (13) konfiguriert ist, um die optische Durchlässigkeit des elektrochromen Filters (18) automatisch in Abhängigkeit von der Intensität des auf den Sensor (19) einfallenden Umgebungslichts einzustellen.

6. Optische Anordnung nach Anspruch 3 oder Anspruch 4, wobei der Lichtsensor (19) so positioniert ist, dass er dem Szenenlicht von einer von der Anordnung betrachteten Szene ausgesetzt ist, so dass die Steueranordnung (13) konfiguriert ist, um die optische Durchlässigkeit des elektrochromen Filters (18) in Abhängigkeit von der Intensität des auf den Sensor einfallenden Szenenlichts automatisch einzustellen.

7. Optische Anordnung nach einem der vorstehenden Ansprüche, wobei der Strahlkombinierer (17) so angeordnet ist, dass er sowohl das Szenenlicht vom Objektivende (3) als auch das von der elektronischen Anzeige (15) emittierte Licht empfängt, um ein von einer Objektivlinse (8) erzeugtes Szenenbild und ein Anzeigebild optisch koaxial zu verschmelzen.

8. Optische Anordnung nach Anspruch 1, wobei der Strahlkombinierer in dem optischen Pfad (5) an einer Position zwischen dem elektrochromen Filter (18) und dem Okular (4) montiert ist.

9. Optische Anordnung nach einem der Ansprüche 1 oder 8, weiter umfassend einen Bildverstärker und wobei der elektrochrome Filter (18) innerhalb des optischen Pfades (5) zwischen dem Bildverstärker und dem Strahlkombinierer montiert ist.

10. Optische Anordnung nach einem der vorstehenden Ansprüche, wobei die Anordnung an dem Objektivende (3) der optischen Anordnung eine Objektivlinse (8) aufweist und wobei der elektrochrome Filter (18) innerhalb des optischen Pfades (5) hinter der Objektivlinse (8) montiert ist.

11. Optische Anordnung nach einem der Ansprüche 1 bis 8, wobei die optische Anordnung eine Objektivlinse (8) am Objektivende (3) des Visiers aufweist und wobei der elektrochrome Filter (18) an dem Objektivende (3) des Visiers vor der Objektivlinse (8) montiert ist.

12. Optische Anordnung nach einem der Ansprüche 1-8, wobei die Steueranordnung (13) konfiguriert ist, um die optische Durchlässigkeit des elektrochromen Filters (18) automatisch einzustellen, um eine vorbestimmte Intensität des Szenenlichts am Okular (4) bereitzustellen.

13. Optische Anordnung nach einem der vorstehenden Ansprüche, wobei der elektrochrome Filter (18) konfiguriert ist, um nur vorbestimmte ausgewählte Wellenlängen des Lichts innerhalb des sichtbaren Spektrums zu dämpfen.

14. Optische Anordnung nach Anspruch 13, abhängig von einem der Ansprüche 8 bis 10, wobei der elektrochrome Filter (18) konfiguriert ist, um nur Lichtwellenlängen zu dämpfen, die den von der elektronischen Anzeige (15) emittierten Wellenlängen entsprechen.

15. Optische Anordnung nach einem der vorstehenden Ansprüche, weiter beinhaltend ein Netzteil (12), das konfiguriert ist, um der Steueranordnung (13) elektrische Energie zuzuführen, wobei das Netzteil (12) auch elektrische Energie für die elektronische Anzeige (15) bereitstellt.

## Revendications

1. Ensemble optique pour visualiser une scène, l'ensemble ayant un chemin optique (5) s'étendant à partir d'une extrémité formant objectif (3) jusqu'à un oculaire (4), un afficheur électronique (15) configuré pour produire des images électroniques, et un mélangeur de faisceaux, le mélangeur de faisceaux (17) étant agencé dans ledit chemin optique (5) et étant configuré pour combiner une lumière émise par ledit afficheur électronique (15) avec une lumière de scène en provenance de ladite extrémité formant objectif (3) de l'ensemble optique pour produire une image en réalité augmentée au niveau dudit oculaire (4),
**caractérisé par** la présence d'un filtre électrochromique (18) monté à l'intérieur dudit chemin optique (5) et d'un agencement de commande électrique (13), l'agencement de commande (13) étant électriquement relié au filtre électrochromique (18) et pouvant être mis en oeuvre pour ajuster la transmittance optique du filtre électrochromique (18) pour commander de ce fait l'intensité de lumière de scène visualisée à travers l'oculaire (4), dans lequel l'agencement de commande (13) inclut un capteur de lumière (19) et est configuré pour ajuster la transmittance optique du filtre électrochromique (18) automatiquement en fonction de l'intensité de lumière incidente sur le capteur de lumière (19).

2. Ensemble optique selon la revendication 1, dans lequel l'agencement de commande (13) est configuré pour une mise en oeuvre manuelle par un utilisateur pour ajuster la transmittance optique du filtre électrochromique (18) manuellement avec une commande utilisateur.

3. Ensemble optique selon l'une quelconque des revendications précédentes, dans lequel le circuit mélangeur de faisceaux (17) comprend un prisme.

4. Ensemble optique selon la revendication 3, dans lequel ledit agencement de commande (13) est configuré pour réduire la transmittance optique du filtre électrochromique (18) en réponse à une augmentation d'intensité de lumière incidente sur le capteur de lumière (19).

5. Ensemble optique selon la revendication 3 ou la revendication 4, dans lequel ledit capteur de lumière (19) est positionné pour une exposition à la lumière ambiante autour de l'ensemble optique de sorte que ledit agencement de commande (13) est configuré pour ajuster la transmittance optique du filtre électrochromique (18) automatiquement en fonction de l'intensité de ladite lumière ambiante incidente sur le capteur (19).

6. Ensemble optique selon la revendication 3 ou la revendication 4, dans lequel ledit capteur de lumière (19) est positionné pour une exposition à la lumière de scène provenant d'une scène visualisée par l'ensemble de sorte que ledit agencement de commande (13) est configuré pour ajuster la transmittance optique du filtre électrochromique (18) automatiquement en fonction de l'intensité de ladite lumière de scène incidente sur le capteur.

7. Ensemble optique selon l'une quelconque des revendications précédentes, dans lequel le mélangeur de faisceaux (17) est agencé pour recevoir tant la lumière de scène provenant de l'extrémité formant objectif (3) que la lumière émise par l'afficheur électronique (15) pour fusionner de façon optique une image de scène produite par une lentille d'objectif (8) et une image d'afficheur d'une façon coaxiale.

8. Ensemble optique selon la revendication 1, dans lequel ledit mélangeur de faisceaux est monté dans ledit chemin optique (5) à une position entre le filtre électrochromique (18) et l'oculaire (4).

9. Ensemble optique selon l'une quelconque des revendications 1 ou 8, comprenant en outre un intensificateur d'image et dans lequel le filtre électrochromique (18) est monté à l'intérieur dudit chemin optique (5), entre l'intensificateur d'image et le mélangeur de faisceaux.

10. Ensemble optique selon l'une quelconque des revendications précédentes, dans lequel l'ensemble a une lentille d'objectif (8) au niveau de ladite extrémité formant objectif (3) de l'ensemble optique, et dans lequel le filtre électrochromique (18) est monté à l'intérieur dudit chemin optique (5) derrière la lentille d'objectif (8).

11. Ensemble optique selon l'une quelconque des revendications 1 à 8, dans lequel l'ensemble optique a une lentille d'objectif (8) au niveau de ladite extrémité formant objectif (3) de la vue, et dans lequel le filtre électrochromique (18) est monté au niveau de ladite extrémité formant objectif (3) de la vue devant la lentille d'objectif (8).

12. Ensemble optique selon l'une quelconque des revendications 1 à 8,
dans lequel ledit agencement de commande (13) est configuré pour ajuster la transmittance optique du filtre électrochromique (18) automatiquement pour fournir une intensité prédéterminée de la lumière de scène au niveau dudit oculaire (4).

13. Ensemble optique selon l'une quelconque des revendications précédentes, dans lequel ledit filtre électrochromique (18) est configuré pour atténuer seulement des longueurs d'onde sélectionnées prédéterminées de lumière à l'intérieur du spectre visible.

14. Ensemble optique selon la revendication 13, lorsque dépendante de l'une quelconque des revendications 8 à 10, dans lequel ledit filtre électrochromique (18) est configuré pour atténuer seulement des longueurs d'onde de lumière correspondant aux longueurs d'onde émises par l'afficheur électronique (15).

15. Ensemble optique selon l'une quelconque des revendications précédentes, incluant en outre une alimentation en énergie (12) configurée pour fournir de l'énergie électrique à l'agencement de commande (13), dans lequel l'alimentation en énergie (12) fournit également de l'énergie électrique de l'afficheur électronique (15).
